# EUROPEAN PATENT SPECIFICATION

(11) **EP 1 775 176 B1**
(45) Date of publication and mention of the grant of the patent: **01.11.2017**
(21) Application number: 06020241.3
(22) Date of filing: 27.09.2006
(51) Int. Cl.: B60R 21/233

(54) **Groove forming airbag**
Eine Nut ausbildender Gassack
Coussin gonflable formant une rainure

(30) Priority: 17.10.2005 US 252426
(43) Date of publication of application: 18.04.2007
(73) Proprietor: KEY SAFETY SYSTEMS, INC., Sterling Heights, MI 48314 (US)
(72) Inventor: Pang, Hyunsok, Rochester Hills, Michigan 48309 (US); Padiyar, Prabhakar, Sterling Heights, Michigan 48313 (US); Jung, Ji Ho, Rochester Hills, Michigan 48307 (US); Kim, Soonsik, Rochester Hills, Michigan 48309 (US); Sadenwater, Robert J., Clarkston, Michigan 48348 (US); Coon, Jeffrey S., Sterling Heights, Michigan 48312 (US)
(74) Representative: Gislon, Gabriele

(56) References cited:
- EP-A2- 1 364 838
- EP-A2- 1 580 083
- "SPLIT AIR BAG" RESEARCH DISCLOSURE, MASON PUBLICATIONS, HAMPSHIRE, GB, no. 395, March 1997 (1997-03), pages 191-192, XP000698581 ISSN: 0374-4353

## Description

The present invention generally relates to passenger side airbags.

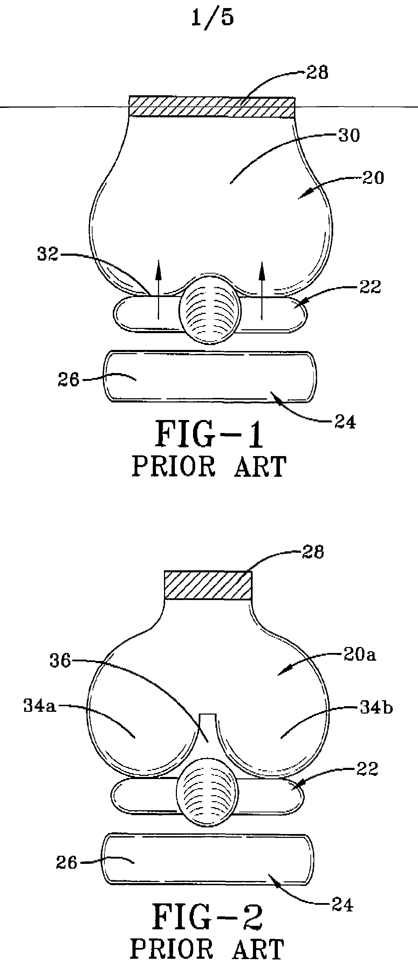

Figure 1 illustrates a top view showing a deployed prior art conventional passenger side airbag 20 in relation to a vehicle occupant 22 seated on a seat 24. The seat back 26 is the only portion of the seat shown. The airbag 20 has a single inflatable chamber 30 inflated by gas from an inflator 28. The face portion or panel 32 of the airbag impacts the vehicle occupant's chest, shoulders and head. If the vehicle occupant's position at the time of airbag inflation deviates from a normal seated position by taking a position closer to the vehicle's instrument panel, the velocity at which the airbag impacts the vehicle occupant increases. If the vehicle occupant's body is on or near the cover of the airbag module at the time of inflation, the interaction of the airbag with the vehicle occupant interaction is elevated.

The prior art, for example JP 2005162195, JP 2005247118, US 2003/0218326 A1, US 2004/0232681 A1, and US 2004/0155439 A1, has proposed that an airbag, such as 20a shown in Figure 2, be formed with spaced-apart lobes 34a, 34b, separated by a groove or space 36. When this airbag 20a is inflated a space or groove 36 is positioned in front of the normally seated vehicle occupant, thereby avoiding contact with the vehicle occupant's head. The interaction of the airbag with the vehicle occupant loading is primarily between the lateral lobes 34a, 34b in relation to the right and left sides of the vehicle occupant's torso and the right and left shoulders of the vehicle occupant, and impact is lessened if the vehicle occupant is out of position at the beginning of airbag inflation.

"Split Air Bag" Research Disclosure, Mason Publications, GB, 395, March 1997, 191-192, discloses a split airbag (10) comprising a main panel (20), a pair of opposing side panels (30, 40) and a center panel (50). A pair of tethers (64) is sewn into the connecting portion (56) of the center panel (50) on either side of the fold line (58). The center panel (50) is sewn to the lateral edges (26, 27) of the main panel (20), while the tethers (64) are sewn to the inside of the main panel (20) adjacent to the inflation gas inlet opening (24). The center panel (50) divides the airbag into two internal chambers, each of them is filled with inflation gas through the respective openings (24). A pocket (70) extends most of the way around the circumference of the tubular shaped airbag. This cause the airbag to have in effect two inflation chambers that communicate with one another via a passageway in the region of the tethers (64).

EP-A-1364838 teaches that a tie panel (16, 16A, 16B, 56, 96) connects an upper portion of the left half airbag (12, 12A, 12B, 52, 92) to the upper portion of the right half airbag (14, 14a, 14B, 54, 94), either using one large tie panel or a pair of tie panels located one above the other.

EP-A-1580083 discloses an air bag in which the tether (18 in Figure 2) is spaced away from the front of the airbag lobes.

The present invention provides in accordance with Claim 1 an airbag that minimizes the interference between the airbag and an out-of-position or normally seated vehicle occupant. During initial deployment, the airbag or cushion deploys along the left and right sides of the vehicle occupant. The spreading-out of the cushion significantly reduces interaction with a vehicle occupant that is seated close to a not yet deployed airbag module.
Figure 1 is a top view of one type of prior art passenger airbag.
Figure 2 is a top view showing the mode of operation of a newly proposed type of airbag, also in the prior art.
Figure 3 is a diagrammatic view of an inflated airbag incorporating the present invention.
Figure 3a is an isometric view of an inflated airbag shown in relation to a vehicle's windshield and seat.
Figure 4 is an exploded view of the present invention illustrating the various panels of material comprising the airbag shown in Figure 3.
Figure 5 is a side plan view illustrating one of the side panels of the airbag in Figure 3, as well as a center panel shown by dashed lines and tether shown in dotted and dashed line.
Figure 6 shows an alternative embodiment of the invention.
Figure 6a shows another alternative embodiment of the invention.
Figure 7 shows a further alternative embodiment of the invention.
Figure 8 shows still another alternative embodiment of the invention.

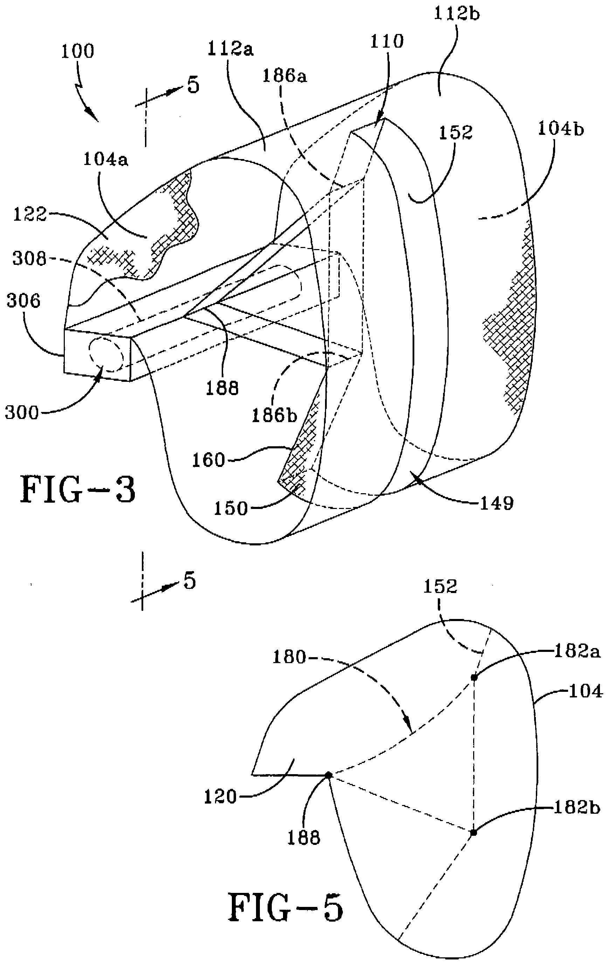

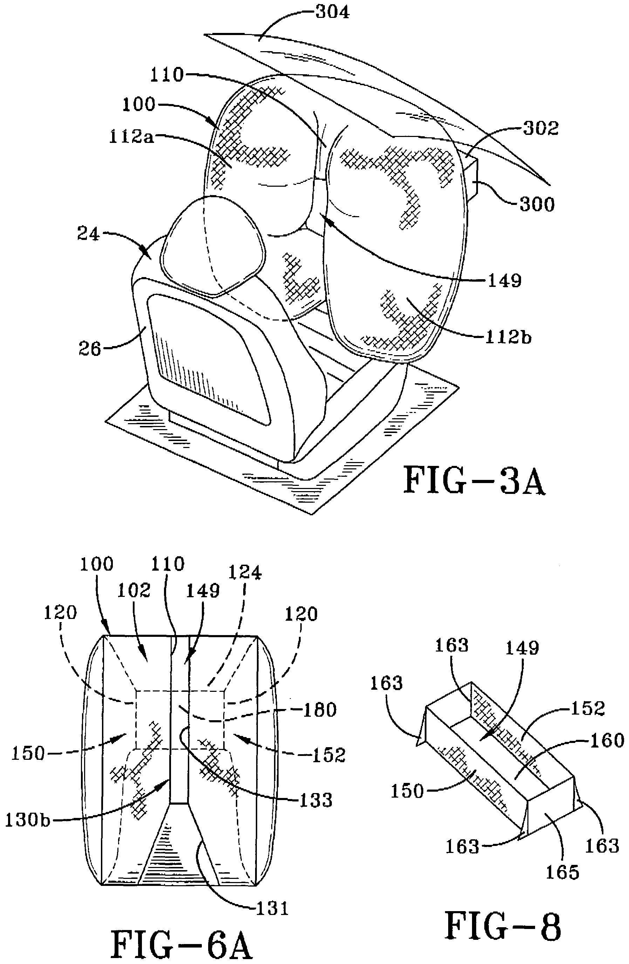

The airbag 100 shown in Figures 3, 3a, 4 and 5 includes a main panel 102 having a face panel portion 103, which faces the vehicle occupant to be protected, and a plurality of side panels 104a, 104b. Each of the panels is typically made from woven airbag material comprising nylon or polyester. The side panels 104a, 104b are substantially identical and the mirror image of the other. Each of the side panels 104a, 104b includes a neck portion 120 and a cushion portion 122. The main panel also includes a plurality of opposing neck portions 124 and a cushion portion 126. The face panel portion 103 is part of the cushion portion 126. The cushion portion, in the vicinity of the face panel portion 103 includes an opening 130, which is used to form a recess in the inflated airbag 100. The airbag is formed by sewing an edge 132 of the side panel 104a to an edge 134 of the face panel 103. Similarly an edge 132a is sewn to another edge 134a in a known manner providing the airbag 100 with its general shape. Upon attachment of the various panels an inflator (not shown) is positioned within the neck of the airbag. Prior to inflation the airbag is folded and stored in a housing 306 of an airbag module 300 of which the airbag 100 is a part. An inflator 306 in the housing inflates the airbag.

A combination of additional pieces of airbag material form a recess that is secured about the edge(s) of the opening in the face panel portion of the cushion portion of the main panel. The recess is configured to form an inwardly extending recess or pocket 110 in the face panel. The recess has a left recess (or groove) panel portion 150 secured to a left portion of the edge 140d of the face panel opening 130, and a right recess panel portion 152 secured to the right portion 140c of the edge of the face panel portion. The recess further includes a center recess panel portion 160 secured to each of the right and left recess panel portions and to the main panel. A tether is secured to the central portion of the recess, for limiting outward movement of the central portion of the recess to cause the airbag, when inflated, to have an inflatable first lobe 112a formed by one side of the recess and by an inflatable second lobe 112b on another side of the recess and the face panel. The opening in the face panel can take various shapes including rectangular, oval and a hybrid shape including a top portion that is rectangular and a lower portion that is triangular

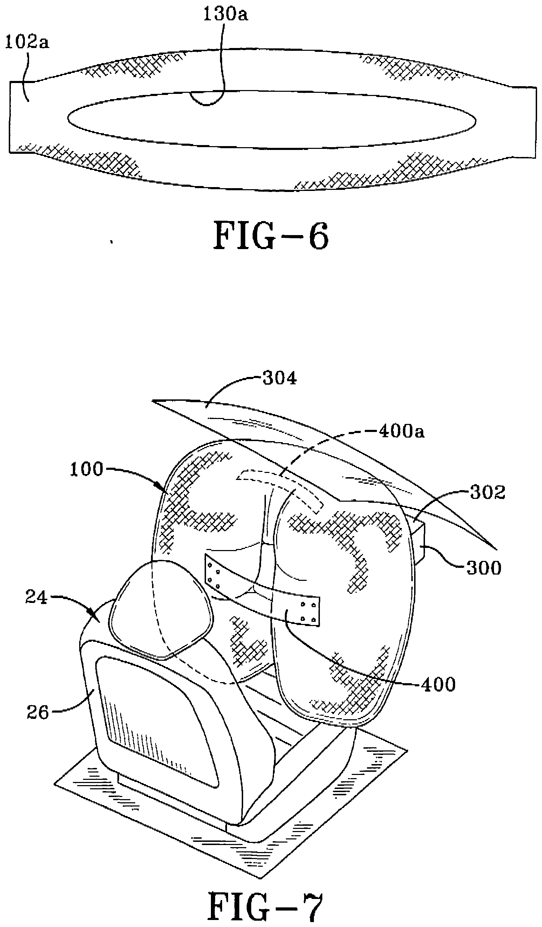

An opening 130 in the main panel 102 has one or more edges 140a, 140b, 140c and 140d. Even though the opening 130 is shown as rectangular in shape, the opening 130 can also be oblong. Figure 6 shows an alternate face panel 102a with an oval opening 130a. The opening 130b in the face panel portion can be an irregular shape, for example a combination of trapezoidal or triangular 131 and rectangular 131a. Such a shape, as shown in Figure 6a, may minimize interference with a child or small adult in an out-of-position seating position with their head or chest on or very close to the cover of a not yet deployed airbag module.

The airbag 100 includes a concave shaped or cup-shaped structure 149, 150, 152, 160 of material fitted within the opening 130 and sewn or otherwise secured to the edge 140 of the main panel opening 130. The cup-shaped structure 149 is located within the airbag below the exterior surface of the main panel and is used, in cooperation with a tether and other panels of material, to create a groove or recess 110 between opposing lobes 112a, 112b. This cup-shaped structure 149 is formed by a shaped, single panel or by sewing one or more panels of material to the edges generally denoted by numeral 140 of the opening 130.

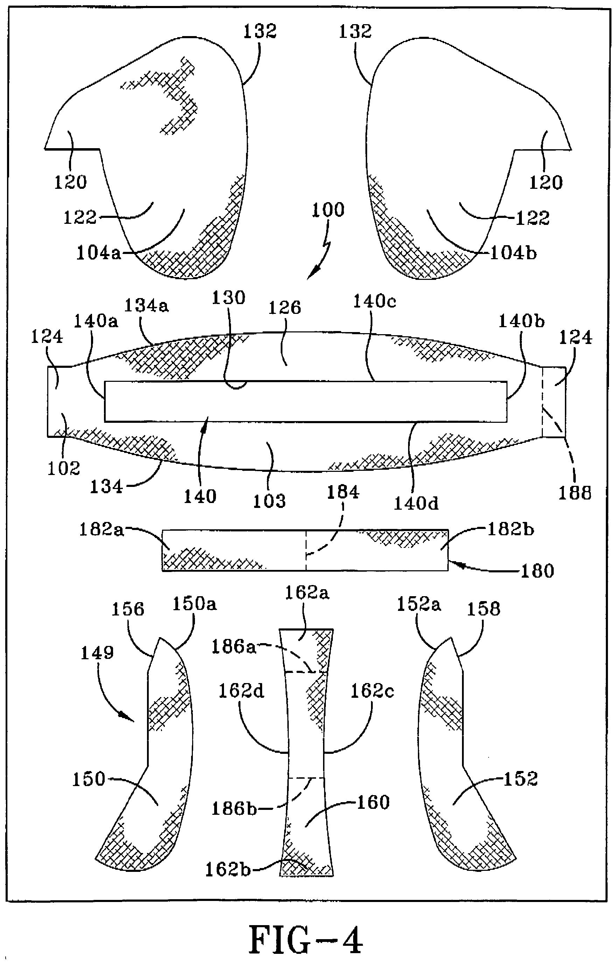

In the embodiment illustrated in Figure 4, the airbag 100 includes a left grooved panel 150 and a right grooved panel 152. An edge 150a of the left grooved panel 150 is sewn to another edge 140d while an edge 152a is sewn to an edge 140c of the main panel 102. Both the left grooved panel 150 and the right grooved panel 152 further includes a side edge 156, 158 opposite edges 150a, 152a. When the side panels 150,152 are sewn to the opening of the main panel 102, they begin to provide depth to the opening 130, as well as to the openings 130a, 130b. The airbag 100 further includes a center groove panel 160 having edges 162a, 162b, 162c and 162d. In general the center groove panel will follow the shape of the opening 130, 130a or 130b. An edge 162d is sewn to an edge 156 of the left grooved panel 150, while edge 162c is sewn to edge 158 of the right grooved panel 152. Further, the edge 162a is sewn to the edge 140a and the edge 162b is sewn to the edge 140b of the opening 130. The left and right grooved panels 150, 152 and 160 form the cup-shaped or concave structure. The concave shape of structure 149 can be formed, for example, by creating pleats 163 properly positioned about a flat piece of material 165.

When the cup-shaped structure 149 including the three groove panels 150, 152 and 160, after being sewn to the main panel 102, is pushed rearward through opening 130, a recessed structure, that is, recess 110 is formed. If the motion of one or more of the panels 150, 152, 160 is not restrained as the airbag inflates, this concave structure 149, upon inflation of the airbag, will balloon outwardly in front of the face panel. To prevent this ballooning, the airbag 100 further includes one or more tethers or tethers 180. Figure 4 illustrates one tether. The tether 180 includes an edge 182a, an edge 182b and an intermediate point 184. The tether 180 can be secured to a portion of module 300 such as housing 306.

Figures 3, 4 and 5 illustrate the placement and location of the tether 180 in relation to the other panels forming the airbag 100. Figure 4 illustrates, in regard to panel 160, dotted lines 186a, 186b, the connection line or seam at which edges 182a, 182b are respectively sewn to the groove center panel 160. Figure 4 also illustrates another dotted line 188 to which the intermediate line or section 184 of the tether 180 is sewn. Upon inflation of the airbag, the tether 180 is stressed, thereby preventing the center groove panel 160, or in general the center of the structure 149, from moving outwardly relative to the lobes 112a, 112b, thereby creating the groove or space 110 between these lobes 112a, 112b and permitting the lobes 112a, 112b to inflate as shown in Figures 3 and 3a, Figure 3a shows the typical inflated shape of the airbag 100. In Figure 3a, the airbag 100 is configured as part of a top-mount airbag module 300. The airbag module 300 is placed, in a known manner, at the top surface of an instrument panel 302 that is shown in phantom line. Upon inflation of the airbag the airbag module's cover is forced open and the airbag inflates upward toward the windscreen 304 and forward toward the seated vehicle occupant. In Figure 3a the vehicle occupant is not shown, however, the vehicle 24 is shown. The various lobes 112a, 112b are clearly shown.

As the airbag 100 initially deploys outwardly during the dynamic event of the inflation, the spacing between the inflating lobes 112a, 112b might increase in size greater than the steady state spacing. Figure 7 shows a patch 400, preferably made of the same material as the airbag, located on the face portion 103 of the main panel 102, which joins the two lobes 112a, 112b and which serves to limit the spacing of the lobes during and after inflation. The material chosen for the patch, instead of being airbag material, could for example be a length of woven seat belt material or any material capable of absorbing a tensile load. In one embodiment a patch 400a joins the tops of both lobes and is shown in phantom line and with the airbag inflated will in general extend horizontally between the lobes. In a preferred embodiment a patch 400 joins opposing middle parts of the lobes. In general the lower patch 400 is chosen to be below the chest of a 6-year-old vehicle occupant when seated in an out-of-position condition with his chest on the cover of the airbag module, as well as below the neck of the normally seated 50^{th} percentile adult vehicle occupant.

## Claims

1. An airbag (100) comprising:
a main panel (102) having a face panel portion (103), said face panel portion (103) being configured to face a vehicle occupant when the airbag is inflated, the main panel (102) in the vicinity of the face panel portion (103) including an opening (130, 130a, 130b), the opening having one or more edges (140, 140a, 140b, 140c, 140d);
a cup-shaped structure (149) is fitted within the opening (130, 130a, 130b) and sewn or otherwise secured to said one or more edges (140, 140a, 140b, 140c, 140d) of the opening (130, 130a, 130b), the cup-shaped structure (149) including a left groove panel (150), a right groove panel (152), and a center groove panel (160) secured to each of the left and right groove panels (150, 152), said center groove panel (160) follows the shape of the opening (130, 130a, 130b), said cup-shaped structure (149) is located within the airbag below the exterior surface of the main panel;
one or more tethers (180) anchored at one end and having a second end secured to a portion of the cup-shaped structure, the length of the tether configured to prevent the cup-shaped structure (149) from moving beyond the exterior surface of the main panel (102);
**characterized in that** said cup-shaped structure (149) is formed by a shaped single panel having pleats (163) positioned about a flat piece of material (165), or by sewing the edges (162c, 162d) of the center groove panel (160) to the edges (158, 156) of the left and right groove panels (150, 152), the cup-shaped structure (149) and remaining parts of the airbag forming opposing lobes (112a, 112b) upon inflation of the airbag, wherein
the cup-shaped structure forms a groove or depression (110) that is secured about said one or more edges (140, 140a, 140b, 140c, 140d) of the opening (130, 130a, 130b) in the face panel portion (103) between the lobes.

2. The airbag (100) according to Claim 1 wherein the tether (180) is attached to the center recess panel (160).

3. The airbag (100) according to Claim 1 wherein the opening (130, 130a, 130b) in the face panel portion (103) of the main panel (102) has a shape that is rectangular, oval or a hybrid shape.

4. The airbag (100) according to Claim 1 wherein the opening (130b) in the face panel portion (103) of the main panel (102) includes a rectangular upper portion and a lower portion that is generally triangular or trapezoidal in shape.

5. The airbag (100) according to any of Claims 1 - 4 further including a patch (400) located on the face panel portion (103) of the main panel (102) joining the opposing lobes (112a, 112b) to one another for limiting the spacing between the lobes (112a, 112b).

6. An airbag module (300) comprising an airbag (100) according to any of Claims 1 - 5, wherein said airbag (100) is folded and stored in a housing (306) of the airbag module (300), said one or more tethers (180) being secured to the housing (306) of the airbag module (300).

## Patentansprüche

1. Airbag (100), umfassend:
eine Hauptplatte (102), welche einen Frontplattenabschnitt (103) aufweist, wobei der Frontplattenabschnitt (103) so konfiguriert ist, dass er einem Fahrzeuginsassen zugewandt ist, wenn der Airbag aufgeblasen wird, wobei die Hauptplatte (102) in der Nähe des Frontplattenabschnitts (103) eine Öffnung (130, 130a, 130b) umfasst, wobei die Öffnung einen oder mehrere Ränder (140, 140a, 140b, 140c, 140d) aufweist;
eine tassenförmige Struktur (149), welche innerhalb der Öffnung (130, 130a, 130b) eingeführt und an den einen oder mehreren Rändern (140a, 140a, 140b, 140c, 140d) der Öffnung (130, 130a, 130b) genäht oder in anderer Wiese befestigt ist, wobei die tassenförmige Struktur (149) eine linke Nutplatte (150), eine rechte Nutplatte (152), und eine mittlere Nutplatte (160) umfasst, welche jeweils an der linken und rechten Nutplatte (150, 152) befestigt sind, wobei die mittlere Nutplatte (160) der Form der Öffnung (130, 130a, 130b) folgt, wobei die tassenförmige Struktur (149) innerhalb des Airbags unterhalb der äußeren Oberfläche der Hauptplatte angeordnet ist;
eine oder mehrere Schnüre (180), welche an einem Ende verankert sind und ein zweites Ende aufweisen, welches an einem Abschnitt der tassenförmigen Struktur befestigt ist, wobei die Länge der Schnur konfiguriert ist, um der tassenförmigen Struktur (149) zu verhindern, sich über die Außenfläche der Hauptplatte (102) hinaus zu bewegen;
**dadurch gekennzeichnet, dass** die tassenförmige Struktur (149) durch Bereitstellen einer einzigen geformten Platte mit Falten (163), welche um ein flaches Stück Materials (165) angeordnet sind, oder durch Nähen der Ränder (162c, 162d) der mittleren Nutplatte (160) mit den Rändern (158, 156) der linken und rechten Nutplatte (150, 152), der tassenförmigen Struktur (149) und restlichen Teile des Airbags gebildet ist, welche gegenüberstehende Keulen (112a, 112b) beim Aufblasen des Airbags bilden, wobei
die tassenförmige Struktur eine Nut oder Vertiefung (110) bildet, welche um den einen oder die mehreren Rändern (140, 140a, 140b, 140c, 140d) der Öffnung (130, 130a, 130b) im Frontplattenabschnitt (103) zwischen den Keulen befestigt ist.

2. Airbag (100) nach Anspruch 1, wobei die Schnur (180) an der mittleren vertieften Platte (160) befestigt ist.

3. Airbag (100) nach Anspruch 1, wobei die Öffnung (130, 130a, 130b) im Frontplattenabschnitt (103) der Hauptplatte (102) eine Form aufweist, welche rechteckig, oval oder hybrid ist.

4. Airbag (100) nach Anspruch 1, wobei die Öffnung (130b) im Frontplattenabschnitt (103) der Hauptplatte (102) einen rechteckigen Oberabschnitt und einen Unterabschnitt umfasst, welcher eine im Wesentlichen dreieckige oder trapezförmige Gestalt aufweist.

5. Airbag (100) nach einem der Ansprüche 1-4, ferner umfassend einen Lappen (400), welcher auf dem Frontplattenabschnitt (103) der Hauptplatte (102) angeordnet ist und welcher die gegenüberstehenden Keulen (112a, 112b) miteinander verbindet, um den Abstand zwischen den Keulen (112a, 112b) zu begrenzen.

6. Airbag-Modul (300), umfassend einen Airbag (100) nach einem der Ansprüche 1-5, wobei der Airbag (100) gefaltet und in einem Gehäuse (306) des Airbagmoduls (300) abgelegt ist, wobei die eine oder die mehreren Schnüren (180) am Gehäuse (306) des Airbagmoduls (300) befestigt sind.

## Revendications

1. Coussin d'air (100), comprenant :
un panneau principal (102) comportant une partie de panneau de face (103), ladite partie de panneau de face (103) étant configurée pour faire face à un occupant du véhicule lorsque le coussin d'air est gonflé, le panneau principal (102) incluant au voisinage de la partie de panneau de face (103) une ouverture (130, 130a, 130b), l'ouverture comportant un ou plusieurs bords (140, 140a, 140b, 140c, 140d) ;
une structure en forme de coupelle (149) étant ajustée dans l'ouverture (130, 130a, 130b) et cousue ou fixée d'une autre manière sur ledit un ou lesdits plusieurs bords (140, 140a, 140b, 140c, 140d) de l'ouverture (130, 130a, 130b), la structure en forme de coupelle (149) incluant un panneau rainuré de gauche (150), un panneau rainuré de droite (152) et un panneau rainuré central (160) fixé sur chacun des panneaux rainurés de gauche et de droite (150, 152), ledit panneau rainuré central (160) suivant la forme de l'ouverture (130, 130a, 130b), ladite structure en forme de coupelle (149) étant agencée dans le coussin d'air au-dessous de la surface externe du panneau principal ;
une ou plusieurs attaches (180) ancrées au niveau d'une extrémité et comportant une deuxième extrémité fixée sur une partie de la structure en forme de coupelle, la longueur de l'attache étant configurée pour empêcher un déplacement de la structure en forme de coupelle (149) au-delà de la surface externe du panneau principal (102) ;
**caractérisé en ce que** ladite structure en forme de coupelle (149) est formée par un seul panneau structuré comportant des plis (163) positionnés autour d'une pièce de matériau plate (165), ou en cousant les bords (162c, 162d) du panneau rainuré central (160) sur les bords (158, 156) des panneaux rainurés de gauche et de droite (150, 152), la structure en forme de coupelle (149) et les parties restantes du coussin d'air formant des lobes opposés (112a, 112b) lors du gonflement du coussin d'air ; dans lequel :
la structure en forme de coupelle forme une rainure ou un creux (110) fixée autour dudit un ou desdits plusieurs bords (140, 140a, 140b, 140d) de l'ouverture (130, 130a, 130b) dans la partie de panneau de face (103) entre les lobes.

2. Coussin d'air (100) selon la revendication 1, dans lequel l'attache (180) est fixée sur le panneau évidé central (160).

3. Coussin d'air (100) selon la revendication 1, dans lequel l'ouverture (130, 130a, 130b) dans la partie de panneau de face (103) du panneau principal (102) a une forme rectangulaire, ovale ou hybride.

4. Coussin d'air (100) selon la revendication 1, dans lequel l'ouverture (130b) dans la partie du panneau de face (103) du panneau principal (102) inclut une partie supérieure rectangulaire et une partie inférieure de forme généralement triangulaire ou trapézoïdale.

5. Coussin d'air (100) selon l'une quelconque des revendications 1 à 4, incluant en outre un raccord (400) agencé sur la partie du panneau de face (103) du panneau principal (102), reliant les lobes opposés (112a, 112b) l'un à l'autre pour limiter l'espacement entre les lobes (112a, 112b).

6. Module de coussin d'air (300), comprenant un coussin d'air (100) selon l'une quelconque des revendications 1 à 5, dans lequel ledit coussin d'air (100) est plié et rangé dans un boîtier (306) du module de coussin d'air (300), ladite une ou lesdites plusieurs attaches (180) étant fixées sur le boîtier (306) du module de coussin d'air (300).
